# FASCICULE DE BREVET EUROPEEN

(11) **EP 1 143 080 B1**
(45) Date de publication et mention de la délivrance du brevet: **09.06.2004**
(21) Numéro de dépôt: 00870059.3
(22) Date de dépôt: 04.04.2000
(51) Int. Cl.: E03F 5/06, E03F 9/00

(54) **Procédé de nettoyage de caniveaux**
Verfahren zur Reinigung von Entwässerungsrinnen
Process for cleaning gullies

(43) Date de publication de la demande: 10.10.2001
(73) Titulaire: Advanced Technics Company S.A., 7760 Escanaffles (BE)
(72) Inventeur: Van Gansberghe, Frédéric M., 1630 Linkebeek (BE); Gherche, Jean-Marc M., 7100 La Louvière (BE); Lens, Michel M., 1190 Bruxelles (BE)
(74) Mandataire: Vandeberg, Marie-Paule L.G.

(56) Documents cités:
- DE-A- 19 622 021
- US-A- 4 521 935

## Description

L'invention concerne un procédé de nettoyage de caniveaux de drainage recouverts d'une grille, ainsi qu'un appareillage destiné à la mise en oeuvre du procédé.

Dans le cadre, notamment, de la récupération des eaux de surface, les systèmes de drainage en ligne, c'est-à-dire formés d'un réseau de caniveaux d'écoulement linéaires en surface, se développent de plus en plus par rapport aux systèmes de drainage par avaloirs, dits par points. L'avantage majeur du drainage en ligne est que le liquide à récupérer parcourt en moyenne une distance moindre, d'où une moindre stagnation.

En outre, dans le système de drainage par avaloirs, les points de collecte doivent être reliés par des conduits souterrains, dont le nettoyage est peu aisé.

Il se pose toutefois un problème lorsque les dimensions des caniveaux et/ou les normes de sécurité imposent la présence de grilles fermant ces caniveaux, notamment dans le cas où des véhicules doivent les franchir.

Le nettoyage, en principe très simple (à l'aide d'une pelle courbe) devient alors fastidieux, car les grilles peuvent comporter, en fonction des normes, jusqu'à huit boulons par mètre courant. Même l'adoption de systèmes de verrouillage rapides ne rend pas ce travail aisé. Pour réduire les frais d'entretien, on doit utiliser des machines de nettoyage pour drainage par point, telles que décrites dans US 4,773,113, complexes et coûteuses.

On connaît par ailleurs des dispositifs de nettoyage, notamment pour des gouttières (voir le brevet US-4,978,241) dans lesquels on utilise la force d'un jet d'eau pour enlever les sédiments au fond des gouttières.

Ce procédé est malheureusement inapplicable dans le cas des caniveaux recouverts de grilles.

L'utilisation d'une lance à haute pression au travers d'une grille classique est malcommode (à cause des éclaboussures) et peu efficace, les sédiments étant tout au plus détassés.
DE 196 22 021 décrit une grille pour caniveau dont les éléments de maillage sont inclinés de façon à permettre un nettoyage manuel au jet. La grille est de préférence en métal soudé .
US 4,521,935 décrit une tête aspirante avec tuyères pour le nettoyage spécifique de grilles au sol.

Le but de l'invention est d'obtenir un curage efficace en un minimum de temps, évitant au personnel impliqué des manipulations fastidieuses.

L'objet de l'invention est un procédé de curage de caniveaux, ces caniveaux étant recouverts de grilles dont la face supérieure est constituée d'une alternance d'éléments de maillage et d'ouvertures, qui comprend les étapes suivantes :-munir les caniveaux de grilles
- prévoir des premiers moyens de guidage le long des grilles, parallèlement à l'axe des caniveaux
- prévoir un dispositif mobile déplaçable au-dessus du plan des grilles des caniveaux, ce dispositif comprenant des seconds moyens de guidage et supportant au moins une tuyère apte à projeter un fluide suivant un angle défini (α) différent de 90° vers les grilles;
- raccorder cette tuyère à une alimentation en fluide sous pression;
- aligner le dispositif mobile parallèlement à l'axe des caniveaux;
- déplacer ce dispositif mobile parallèlement à l'axe des caniveaux, au-dessus du plan des grilles en place, ledit dispositif mobile étant guidé et aligné par rapport à l'axe du caniveau par coopération des dits premiers et seconds moyens de guidage de façon à maintenir l'angle défini (α) constant;
- projeter du fluide sous pression vers le fond des caniveaux, au travers des grilles.

Ce procédé réduit fortement les manipulations nécessitées par l'entretien des caniveaux.
De préférence,les caniveaux sont munis d' éléments de maillage dont la surface, projetée suivant un angle défini α différent de 90° par rapport au plan de la grille, passe par un minimum. On réduit ainsi les éclaboussures et la force des jets est utilisée de façon optimale.

De façon avantageuse, l'angle défini α est un angle aigu, compris de préférence entre 35 et 55°, de façon à entraîner un maximum de débris délogés.

Le déplacement du dispositif s'effectue de préférence suivant la pente des caniveaux, de l'aval vers l'amont, de façon à faciliter l'évacuation des détritus et sédiments vers les points de collecte.

Chaque tuyère est de préférence dirigée vers l'aval des caniveaux, ce qui réduit notamment les efforts de déplacement du dispositif mobile.

Un autre objet de l'invention est une installation de curage de caniveaux recouverts d'une grille qui comprend :
- un dispositif mobile destiné à se déplacer parallèlement à l'axe des caniveaux au-dessus du plan de grille, ce dispositif supportant au moins une tuyère raccordée à une alimentation en fluide sous pression et apte à projeter ce fluide suivant un angle défini α différent de 90° par rapport au plan des grilles;
- les grilles étant formée d'une alternance d'éléments de maillage et d'ouvertures
- des premiers moyens de guidage et d'alignement ménagés le long des grilles parallèlement à l'axe du caniveau et des seconds moyens de guidage portés par le dispositif mobile, les dits premiers et seconds moyens de guidage étant aptes à coopérer de façon à guider et aligner le dispositif mobile par rapport à l'axe du caniveau

La grille est, avantageusement, formée d'éléments de maillage dont la surface apparente passe par un minimum lorsqu'elle est vue en substance suivant l'angle α du fluide sortant de la tuyère.

Les moyens d'alignement et de guidage comprennent avantageusement au moins une rainure disposée parallèlement à l'axe de chaque caniveau.

L'invention a également pour objet un dispositif mobile pour curage de caniveaux recouverts d'une grille pour une installation de curage comme décrit ci-dessus qui comprend :
un bâti mobile suivant un axe horizontal au-dessus du plan de grilles de caniveaux,
- au moins une tuyère fixée sur ce bâti, apte à projeter un fluide suivant un angle α différent de 90° défini par rapport au plan des grilles,
- un raccordement à une alimentation en fluide sous pression,
- des seconds moyens de guidage portés par le dispositif mobile, les dits seconds moyens de guidage étant aptes à coopérer avec des premiers moyens de guidage placés le long d'un caniveau de façon à guider et aligner le dispositif mobile par rapport à l'axe du caniveau.

Suivant un mode de réalisation préféré, le dispositif mobile comprend une jupe dont une des dimensions correspond à la largeur des caniveaux, de même qu'au moins un déflecteur associé aux tuyères, renvoyant les éclaboussures de fluide au travers de la grille, sensiblement suivant le même angle défini α.

Suivant un mode de réalisation avantageux, ce dispositif de curage comprend un embout permettant de le fixer à la lance d'un dispositif de nettoyage sous haute pression

Suivant un autre mode de réalisation, il comprend une alimentation embarquée en fluide sous pression, et éventuellement un réservoir pour l'alimentation embarquée en fluide sous pression.
Un autre objet de l'invention est une grille de recouvrement de caniveaux pour une installation de curage de caniveaux telle que décrit ci-dessus, formée d'une alternance d'ouvertures et d'éléments de maillage disposés transversalement par rapport à l'axe du caniveau , la surface apparente de ceux-ci passant par un minimum lorsque la grille est vue suivant un angle défini α différent de 90° par rapport à son plan supérieur, la dite grille comprenant des rainures ou nervures latérales ménagées parallèlement à l'axe longitudinal de la grille, aptes à coopérer avec des moyens complémentaires de guidage disposés sur un dispositif mobile de curage, de façon à guider et aligner le dit dispositif par rapport à l'axe du caniveau.

Suivant un mode de réalisation avantageux, la face supérieure des éléments de maillage de cette grille est inclinée de façon à coopérer avec au moins un déflecteur du dispositif mobile pour renvoyer une partie du fluide sous pression vers la grille suivant le même angle défini. Cette particularité réduit le gaspillage d'eau et améliore le rendement du procédé.

D'autres particularités ou avantages de l'invention ressortiront de la description ci-après de formes de réalisations particulières, référence étant faite aux dessins annexés, dans lesquels :
- la figure 1 est une vue schématique en perspective, avec arrachement du dispositif mobile de l'invention en fonctionnement sur un caniveau.
- la figure 2 est une vue en coupe détaillée du dispositif mobile de la figure 1,
- La figure 3 est une vue en coupe détaillée d'une variante d'exécution du dispositif mobile de la figure 1,
- la figure 4 est une vue en perspective d'une grille de caniveau suivant l'invention,
- la figure 5 est une vue partielle d'une coupe suivant le plan V-V de la grille de la figure 4.

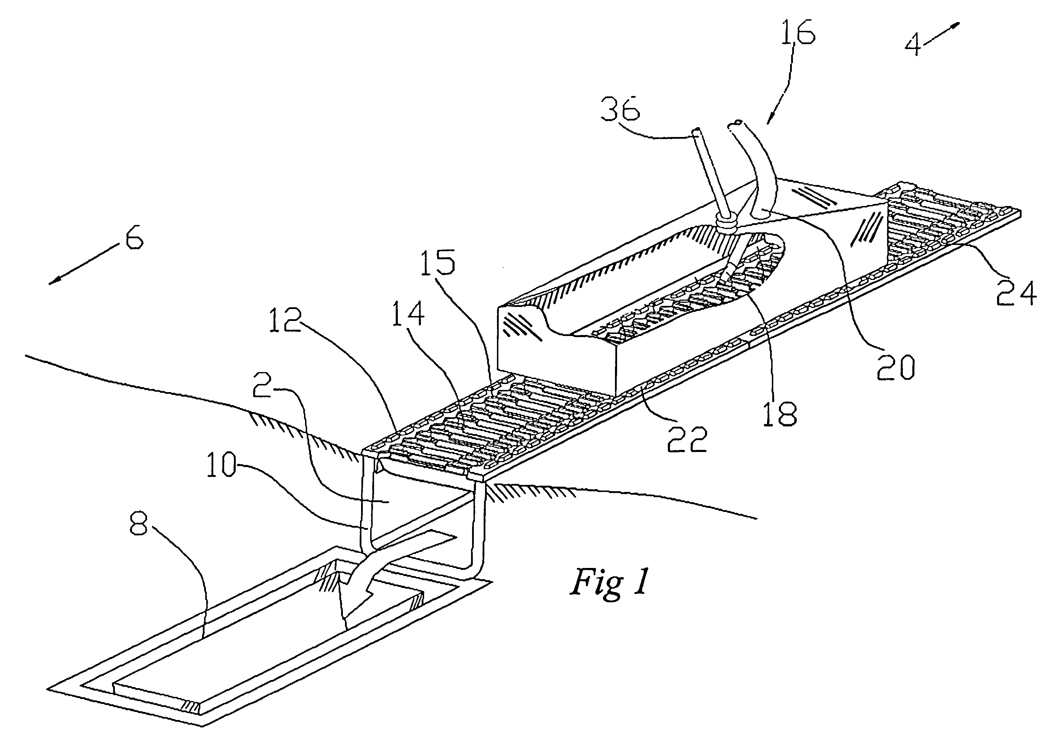

La Figure 1 représente un tronçon de caniveau 1 de drainage d'eaux de surface. Ce caniveau 1 est formé d'éléments préfabriqués 2 avec une pente incorporée (généralement de 0,5 à 1 %) de l'amont 4 vers l'aval 6, l'extrémité aval 6 d'une ligne de caniveau 1 est reliée à un dessableur 8 où l'eau drainée est décantée avant d'être envoyée à l'égout.

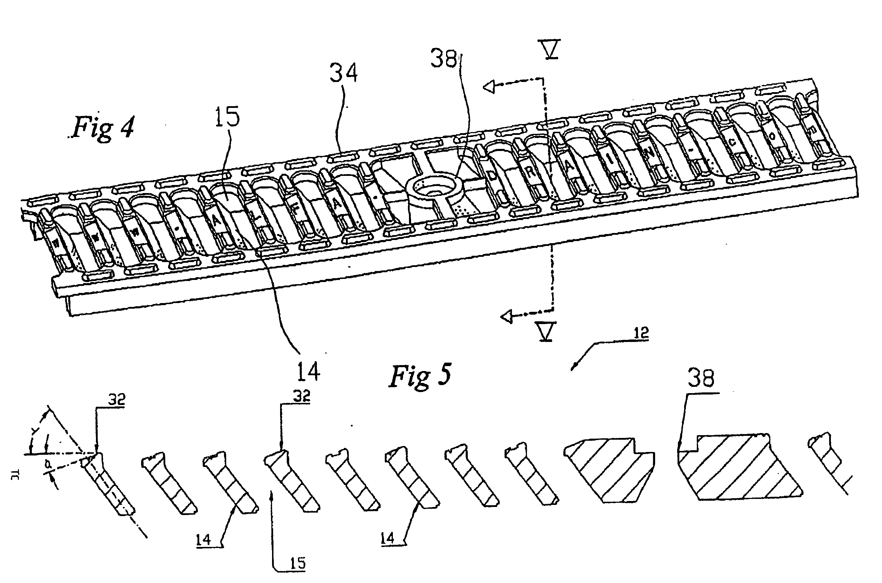

Chaque élément préfabriqué 2 comprend un corps 10 surmonté d'une grille 12 fixée en place par un système de verrouillage (voir Figure 4).

Les dimensions des corps 10 de caniveaux 1 sont déterminées de façon à pouvoir acheminer les eaux lors des fortes pluies annuelles. Ils sont donc surdimensionnés par rapport aux besoins courants et ne charrient qu'un filet d'eau à faible vitesse d'écoulement, d'où une sédimentation rapide des débris et particules en suspension en amont du dessableur 8. Cette sédimentation ralentit encore l'écoulement, d'où la nécessité d'un curage périodique.

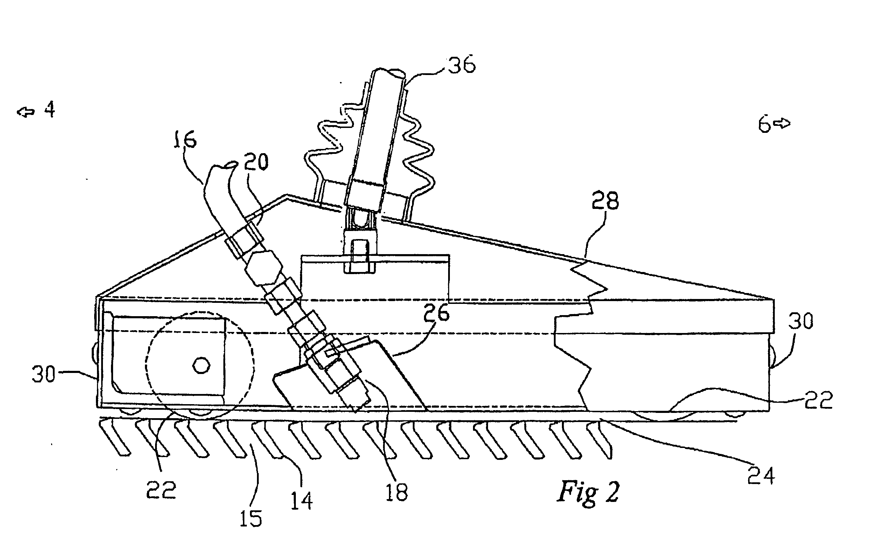

Le procédé de curage de l'invention rend cette opération aisée, en permettant de se passer du démontage des grilles. Il combine avantageusement l'usage de grilles 12 de formes particulières, décrites ci-après, et celui d'un dispositif mobile 16 représenté plus en détail à la figure 2.

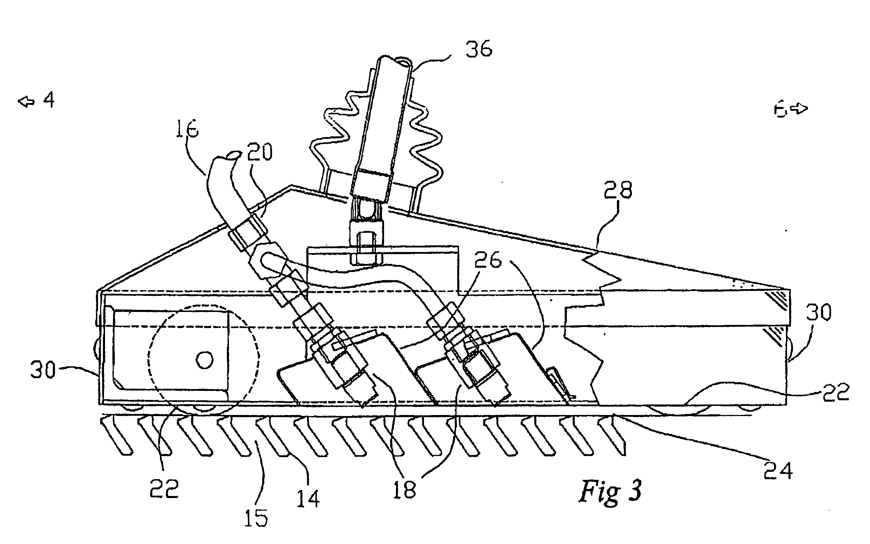

La grille 12 utilisée dans le procédé de l'invention est formée d'une alternance d'ouvertures 15 et d'éléments de maillage 14. Les éléments de maillage 14 des grilles ici représentées sont conçus de telle façon que leur surface apparente est minimale lorsqu'on les observe sous un angle défini α. Le dispositif mobile 16 de l'invention comprend quant à lui une ou deux tuyères 18 (voir respectivement les Figures 2 et 3) dont l'axe de projection, dirigé vers l'aval, est incliné du même angle α par rapport au plan de la grille 12.

Des pièces de raccordement 20 permettent de raccorder les tuyères 18 du dispositif mobile 16 à une alimentation en fluide sous pression (non représentée). Le dispositif mobile 16 est muni de roulettes 22 qui coopérant avec des rainures courant parallèlement à l'axe des caniveaux, alignent le dispositif mobile 16 et ses tuyères 18 de façon à faire coïncider l'axe de projection de ces tuyères avec l'angle α des éléments de maillage 14 de la grille 12.

De la sorte, une proportion maximisée de la puissance des jets émis par les tuyères franchit la grille et va frapper le fond du corps 10 du caniveau pour y déliter les sédiments.

Les roulettes 22 assurent également un déplacement aisé du dispositif mobile 16 le long des caniveaux.

Des déflecteurs 26 sont disposés à proximité à chaque tuyère 18. Leur forme maximise le renvoi de la fraction du jet dévié par les éléments 14 sous le même angle α vers la grille 12.

Par ailleurs, le dispositif mobile 16 est recouvert d'une carrosserie 28 dont la partie inférieure, ouverte, forme une jupe 30 dont la garde au sol est réduite, de façon à protéger l'opérateur des éclaboussures.

La Figure 5 illustre un détail de conception des éléments de maillage 14 de la grille 12. Leur face supérieure 32 est inclinée par rapport à l'horizontal, de façon à coopérer avec la forme des déflecteurs 26 pour renvoyer vers le fond du caniveau la fraction des jets déviés, avec une force optimale.

La valeur de l'angle α n'est pas indifférente, de même que le nombre de tuyères monté sur le dispositif mobile 16.

Les essais montrent que l'efficacité de curage est optimale lorsque α est compris entre 35 et 55°, l'angle idéal étant approximativement de 45°.

Dans ces conditions, la couche sédimentaire est efficacement désintégrée par la force du jet et aussitôt entraînée vers l'aval.

On peut, suivant la largeur des caniveaux à traiter, monter des tuyères 18 à jet plus ou moins étalé en pinceau dans le plan α ou monter plusieurs tuyères 18 côte à côte dans un même plan transversal.

Le montage de deux tuyères agissant dans deux plans successifs, comme montré à la figure 3, est également avantageux, le jet de la première tuyère 18 disloquant la couche de sédiment, dont les débris sont évacués par le jet de la deuxième tuyère 18.

L'inclinaison des tuyères 18 provoque par réaction une force tendant à déplacer le dispositif mobile 16 en sens contraire, soit ici vers l'amont 4.

Cet effet est mis à profit en déplaçant le dispositif mobile de la partie aval 6 des caniveaux vers la partie amont (en s'éloignant donc des dessableurs 8). De la sorte, non seulement les débris accumulés sont entraînés plus facilement vers un tronçon déjà nettoyé, mais en outre l'opérateur ne doit exercer qu'un effort minime pour déplacer le dispositif 16.

Le guidage du dispositif mobile 16 peut être assuré par des nervures 34, éventuellement discontinues, ménagées sur la grille elle-même, comme figuré à la figure 4.

Suivant le format des caniveaux 1 et les longueurs à traiter, différents modes de réalisation du dispositif mobile 16 peuvent être envisagés. En version courante, ce dispositif peut être muni d'un manche 36 permettant de le déplacer manuellement le long des caniveaux. Ce déplacement peut également être «assisté» par un moteur, notamment pour l'usage sur le réseau routier (par exemple, le long d'autoroutes).

Lorsque les caniveaux sont de longueur importante, le dispositif mobile peut être muni d'une alimentation autonome et même d'un réservoir embarqué.

On remarquera par ailleurs qu'avec un maillage 14 approprié des grilles 12, le dispositif mobile 16 et/ou les tuyères 18 peuvent parfaitement être décentrés par rapport au plan vertical médian des caniveaux 1. Ceci permet notamment d'optimiser certains angles d'attaque (en évitant les sièges 38 des systèmes de verrouillage des grilles) et de réduire les dangers lorsqu'on opère le long de voies de circulation.

Le dispositif mobile 16 peut également être muni de raccords permettant de l'adapter à l'embouchure ou à la lance d'appareils de nettoyage à haute pression existants, notamment pour le nettoyage réglementaire de stations services ou pour des installations privées.

## Revendications

1. Procédé de curage de caniveaux (1), ces caniveaux (1) étant recouverts de grilles (12) dont la face supérieure est constituée d'une alternance d'éléments de maillage (14) et d'ouvertures (15), qui comprend les étapes suivantes :
- munir les caniveaux de grilles (12)
- prévoir des premiers moyens de guidage (24,34) le long des grilles, parallèlement à l'axe des caniveaux (1).
- prévoir un dispositif mobile (16) déplaçable au-dessus du plan des grilles (12) des caniveaux, ce dispositif (16) comprenant des seconds moyens de guidage (22) et supportant au moins une tuyère (18) apte à projeter un fluide suivant un angle défini (α) différent de 90° vers les grilles (12);
- raccorder cette au moins une tuyère (18) à une alimentation en fluide sous pression;
- aligner le dispositif mobile (16) parallèlement à l'axe des caniveaux (1);
- déplacer ce dispositif mobile (16) parallèlement à l'axe des caniveaux (1), au-dessus du plan des grilles (12) en place, ledit dispositif mobile (16) étant guidé et aligné par rapport à l'axe du caniveau par coopération des dits premiers et seconds moyens de guidage de façon à maintenir l'angle défini (α) constant;
- projeter le fluide sous pression vers le fond des caniveaux (1), au travers des grilles (12).

2. Procédé de curage suivant la revendication 1, **caractérisé en ce qu'**il comprend l'opération suivante :
- munir les caniveaux de grilles (12) dont la surface apparente des éléments de maillage (14) passe par un minimum lorsque les dits éléments (14) sont vus suivant l'angle défini (α) différent de 90° par rapport au plan de la grille (1)

3. Procédé de curage suivant la revendication 2, **caractérisé en ce que** l'angle défini (α) est un angle aigu.

4. Procédé de curage suivant la revendication 3, **caractérisé en ce que** l'angle défini (α) est compris entre 35 et 55°.

5. Procédé de curage suivant l'une quelconque des revendications 1 à 4, **caractérisé en ce que** le déplacement du dispositif s'effectue suivant la pente des caniveaux (1), de l'aval (6) vers l'amont (4).

6. Procédé de curage suivant l'une quelconque des revendications précédentes, **caractérisé en ce que** la au moins une tuyère (18) est dirigée vers l'aval (6) des caniveaux (1).

7. Installation de curage de caniveaux (1) recouverts de grilles (12) **caractérisée en ce qu'**elle comprend :
- un dispositif mobile (16) destiné à se déplacer parallèlement à l'axe des caniveaux (1) au-dessus du plan de grille (12), ce dispositif (16) supportant au moins une tuyère (18) raccordée à une alimentation en fluide sous pression et apte à projeter ce fluide suivant un angle défini, différent de 90°, par rapport au plan des grilles (12);
- les grilles (12) étant formée d'une alternance d'éléments de maillage (14) et d'ouvertures (15)
- des premiers moyens de guidage et d'alignement (24,34) ménagés le long des grilles parallèlement à l'axe du caniveau et des seconds moyens de guidage (22) portés par le dispositif mobile (16), les dits premiers et seconds moyens de guidage étant aptes à coopérer de façon à guider et aligner le dispositif mobile par rapport à l'axe du caniveau (1).

8. Installation suivant la revendications 7, **caractérisée en ce que** la surface apparente des éléments de maillage (14) des grilles (12) passe par un minimum lorsque les dits éléments (14) sont vus en substance suivant l'angle (α) du fluide sortant de la au moins une tuyère (18).

9. Un dispositif mobile (16) pour une installation de curage suivant l'une quelconque des revendications 7 et 8 **caractérisé en ce qu'**il comprend :
- un bâti mobile suivant un axe horizontal au-dessus du plan de grilles (12) de caniveaux (1),
- au moins une tuyère (18) fixé sur ce bâti, apte à projeter un fluide suivant un angle α différent de 90° défini par rapport au plan des grilles (12),
- un raccordement (20) à une alimentation en fluide sous pression,
- des seconds moyens de guidage (22) portés par le dispositif mobile (16), les dits seconds moyens de guidage étant aptes à coopérer avec des premiers moyens de guidage placés le long d'un caniveau de façon à guider et aligner le dispositif mobile par rapport à l'axe du caniveau (1).

10. Un dispositif mobile de curage (16) suivant la revendication 9, **caractérisé en ce qu'**il comprend une jupe (30) dont une des dimensions correspond à la largeur des caniveaux (1).

11. Un dispositif mobile de curage (16) suivant l'une quelconque des revendications 9 à 10, **caractérisé en ce qu'**il comprend au moins un déflecteur (26) associé aux tuyères (18), renvoyant les éclaboussures de fluide au travers de la grille (12), sensiblement suivant le même angle (α) défini.

12. Un dispositif mobile de curage (16) suivant l'une quelconque des revendications 9 à 11, **caractérisé en ce qu'**il comprend un embout permettant de le fixer à l'embouchure d'un appareil de nettoyage à haute pression.

13. Un dispositif mobile de curage (16) suivant l'une quelconque des revendications 9 à 12, **caractérisé en ce qu'**il comprend une alimentation embarquée en fluide sous pression.

14. Un dispositif mobile de curage (16) suivant la revendication 13, **caractérisé en ce qu'**il comprend un réservoir pour l'alimentation en fluide sous pression.

15. Une grille (12) de recouvrement de caniveaux (1) pour une installation de curage de caniveaux (1) suivant l'une quelconque des revendications 7 et 8, **caractérisée en ce qu'**elle est formée d'éléments de maillage (14) disposés transversalement par rapport à l'axe du caniveau et dont la surface apparente passe par un minimum lorsque les dits éléments (14) sont vus suivant un angle (α) différent de 90° défini par rapport à son plan supérieur, la dite grille comprenant des rainures ou nervures latérales ménagées parallèlement à l'axe longitudinal de la grille et constituant des moyens de guidage et d'alignement (24,34) aptes à coopérer avec des moyens complémentaires de guidage (22) disposés sur un dispositif mobile de curage(16) de façon à guider et aligner le dit dispositif par rapport à l'axe du caniveau (1).

16. Une grille (12) de recouvrement de caniveaux (1) suivant la revendication 15, **caractérisée en ce que** la face supérieure (32) des éléments de maillage (14) est inclinée de façon à coopérer avec au moins un déflecteur (26) du dispositif mobile (16) pour renvoyer la fraction du fluide sous pression frappant ces éléments (14) vers la grille (14) suivant le même angle (α) défini.

## Patentansprüche

1. Verfahren zur Reinigung von Entwässerungsrinnen (1), welche von Rosten (12) bedeckt sind, deren Oberseite aus einer Wechselfolge von Gitterelementen (14) und Öffnungen (15) besteht, bei dem man:
- die Entwässerungsrinnen mit Rosten (12) ausstattet;
- entlang den Rosten parallel zur Achse der Entwässerungsrinnen (1) erste Führungsmittel (24, 34) vorsieht;
- eine über der Ebene der Roste (12) der Entwässerungsrinnen verschiebbare bewegliche Vorrichtung (16) vorsieht, wobei Letztere zweite Führungsmittel (22) aufweist und mindestens eine Düse (18) trägt, die ein Fluid in einem definierten Winkel (α) von ungleich 90° zu den Rosten (12) spritzen kann;
- diese mindestens eine Düse (18) an einer Druckfluidversorgung anschließt;
- die bewegliche Vorrichtung (16) parallel zur Achse der Entwässerungsrinnen (1) ausrichtet;
- diese bewegliche Vorrichtung (16) parallel zur Achse der Entwässerungsrinnen (1) über der Ebene der sich in Position befindenden Roste (12) verschiebt, wobei die bewegliche Vorrichtung (16) durch Zusammenwirken der ersten und der zweiten Führungsmittel bezüglich der Achse der Entwässerungsrinne so geführt und ausgerichtet wird, dass der definierte Winkel (α) konstant gehalten wird;
- das Fluid unter Druck durch die Roste (12) zum Grund der Entwässerungsrinnen (1) spritzt.

2. Reinigungsverfahren nach Anspruch 1, **dadurch gekennzeichnet, dass** man dabei
- die Entwässerungsrinnen mit Rosten (12) versieht, bei denen die sichtbare Fläche der Gitterelemente (14) minimal ist, wenn die Elemente (14) gemäß einem definierten Winkel (α) ungleich 90° zur Ebene des Rostes (1) betrachtet werden.

3. Reinigungsverfahren nach Anspruch 2, **dadurch gekennzeichnet, dass** der definierte Winkel (α) ein spitzer Winkel ist.

4. Reinigungsverfahren nach Anspruch 3, **dadurch gekennzeichnet, dass** der definierte Winkel (α) zwischen 35 und 55° liegt.

5. Reinigungsverfahren nach einem der Ansprüche 1 bis 4, **dadurch gekennzeichnet, dass** die Verschiebung der Vorrichtung entlang der Neigung der Entwässerungsrinnen (1) in Strömungsrichtung von unten (6) nach oben (4) erfolgt.

6. Reinigungsverfahren nach einem der vorhergehenden Ansprüche, **dadurch gekennzeichnet, dass** die mindestens eine Düse (18) stromabwärts (6) der Entwässerungsrinnen (1) gerichtet ist.

7. Anlage zur Reinigung von mit Rosten (12) bedeckten Entwässerungsrinnen (1), **dadurch gekennzeichnet, dass** sie Folgendes umfasst:
- eine bewegliche Vorrichtung (16), die sich parallel zur Achse der Entwässerungsrinnen (1) über der Ebene des Rosts (12) verschieben soll und mindestens eine Düse (18) trägt, die an einer Druckfluidversorgung angeschlossen ist und dieses Fluid gemäß einem definierten Winkel ungleich 90° zur Ebene der Roste (12) spritzen kann;
- wobei die Roste (12) aus einer Wechselfolge von Gitterelementen (14) und Öffnungen (15) bestehen;
- erste Führungs- und Ausrichtungsmittel (24, 34), die entlang den Rosten parallel zur Achse der Entwässerungsrinne ausgebildet sind, und zweite Führungsmittel (22), die von der beweglichen Vorrichtung (16) getragen werden, wobei die ersten und die zweiten Führungsmittel zur Führung und Ausrichtung der beweglichen Vorrichtung bezüglich der Achse der Entwässerungsrinne (1) zusammenwirken können.

8. Anlage nach Anspruch 7, **dadurch gekennzeichnet, dass** die sichtbare Fläche der Gitterelemente (14) der Roste (12) minimal ist, wenn die Elemente (14) im Wesentlichen gemäß dem Winkel (α) des aus der mindestens einen Düse (18) austretenden Fluids betrachtet werden.

9. Bewegliche Vorrichtung (16) für eine Reinigungsanlage nach Anspruch 7 oder 8, **dadurch gekennzeichnet, dass** sie Folgendes umfasst:
- einen gemäß einer horizontalen Achse über der Ebene der Roste (12) der Entwässerungsrinnen (1) beweglichen Rahmen,
- mindestens eine an diesem Rahmen befestigte Düse (18), die ein Fluid gemäß einem zur Ebene der Roste (12) definierten Winkel α ungleich 90° spritzen kann,
- einen Anschluss (20) an eine Druckfluidversorgung,
- von der beweglichen Vorrichtung (16) getragene zweite Führungsmittel (22), die mit den entlang einer Entwässerungsrinne angeordneten ersten Führungsmitteln zur Führung und Ausrichtung der beweglichen Vorrichtung bezüglich der Achse der Entwässerungsrinne (1) zusammenwirken können.

10. Bewegliche Reinigungsvorrichtung (16) nach Anspruch 9, **dadurch gekennzeichnet, dass** sie eine Schürze (30) umfasst, von der eine der Abmessungen der Breite der Entwässerungsrinnen (1) entspricht.

11. Bewegliche Reinigungsvorrichtung (16) nach Anspruch 9 oder 10, **dadurch gekennzeichnet, dass** sie mindestens eine den Düsen (18) zugeordnete Ablenkvorrichtung (26) aufweist, die Fluidspritzer im Wesentlichen gemäß dem gleichen definierten Winkel (α) durch den Rost (12) umlenkt.

12. Bewegliche Reinigungsvorrichtung (16) nach einem der Ansprüche 9 bis 11, **dadurch gekennzeichnet, dass** sie ein Endstück aufweist, das es gestattet, sie an der Mündung eines Hochdruckreinigungsgeräts zu befestigen.

13. Bewegliche Reinigungsvorrichtung (16) nach einem der Ansprüche 9 bis 12, **dadurch gekennzeichnet, dass** sie eine eingebaute Druckfluidversorgung umfasst.

14. Bewegliche Reinigungsvorrichtung (16) nach Anspruch 13, **dadurch gekennzeichnet, dass** sie einen Behälter für die Druckfluidversorgung umfasst.

15. Rost (12) zum Abdecken von Entwässerungsrinnen (1) für eine Anlage zur Reinigung von Entwässerungsrinnen (1) nach Anspruch 7 oder 8, **dadurch gekennzeichnet, dass** er aus Gitterelementen (14) besteht, die quer zur Achse der Entwässerungsrinne angeordnet sind und deren sichtbare Fläche minimal ist, wenn die Elemente (14) gemäß einem bezüglich seiner oberen Ebene definierten Winkel (α) ungleich 90° betrachtet werden, wobei der Rost parallel zur Längsachse des Rosts ausgebildete seitliche Nuten oder Rippen umfasst, die Führungs- und Ausrichtungsmittel (24, 34) bilden, welche mit an einer beweglichen Reinigungsvorrichtung (16) angeordneten komplementären Führungsmitteln (22) zur Führung und Ausrichtung der Vorrichtung bezüglich der Achse der Entwässerungsrinne (1) zusammenwirken können.

16. Rost (12) zum Abdecken von Entwässerungsrinnen (1) nach Anspruch 15, **dadurch gekennzeichnet, dass** die Oberseite (32) der Gitterelemente (14) zum Zusammenwirken mit mindestens einer Ablenkvorrichtung (26) der beweglichen Vorrichtung (16) geneigt ist, um den Anteil des Druckfluids, der gegen diese Elemente (14) schlägt, gemäß dem gleichen definierten Winkel (α) zum Rost (14) umzulenken.

## Claims

1. Method of flushing gulleys (1), these gulleys (1) being covered by grilles (12) the upper face of which consists of alternating elements of mesh (14) and openings (15), comprising the following steps :
- fitting the gulleys with grilles (12)
- providing first guidance means (24, 34) along the grilles, parallel to the axis of the gulleys (1).
- providing a mobile device (16) movable over the plane of the grilles (12) of the gulleys, this device (16) comprising second guidance means (22) and supporting at least one blast pipe (18) suitable for spraying a fluid at a defined angle (α) not 90° towards the grilles (12);
- connecting this at least one blast pipe (18) to a supply of fluid under pressure;
- aligning the mobile device (16) parallel to the axis of the gulleys (1);
- moving this mobile device (16) parallel to the axis of the gulleys (1), over the plane of the grilles (12) in place, the said mobile device (16) being guided and aligned in relation to the axis of the gulley by cooperation of the said first and second guidance means so as to keep the defined angle (α) constant;
- spraying the fluid under pressure towards the bottom of the gulleys (1) through the grilles (12).

2. Method of flushing according to Claim 1, **characterized in that** it comprises the following operation :
- fitting the gulleys with grilles (12) the apparent surface area of the elements of mesh (14) of which is at a minimum when the said elements (14) are seen at the defined angle (α) not 90° in relation to the plane of the grille (1).

3. Method of flushing according to Claim 2, **characterized in that** the defined angle (α) is an acute angle.

4. Method of flushing according to Claim 3, **characterized in that** the defined angle (α) is between 35 and 55°.

5. Method of flushing according to any one of Claims 1 to 4, **characterized in that** the device moves along the slope of the gulleys (1), from the downstream end (6) towards the upstream end (4).

6. Method of flushing according to any one of the preceding claims, **characterized in that** the at least one blast pipe (18) is directed in the downstream (6) direction of the gulleys (1).

7. Installation for flushing gulleys (1) covered with grilles (12), **characterized in that** it comprises :
- a mobile device (16) intended to move parallel to the axis of the gulleys (1) over the plane of the grille (12), this device (16) supporting at least one blast pipe (18) connected to a supply of fluid under pressure and suitable for spraying this fluid at a defined angle, not 90°, in relation to the plane of the grilles (12);
- the grilles (12) being formed of alternating elements of mesh (14) and openings (15)
- first guidance and alignment means (24, 34) disposed along the grilles parallel to the axis of the gulley and second guidance means (22) carried by the mobile device (16), the said first and second guidance means being suitable for cooperating so as to guide and align the mobile device in relation to the axis of the gulley (1).

8. Installation according to Claim 7, **characterized in that** the apparent surface area of the mesh elements (14) of the grilles (12) is at a minimum when the said elements (14) are seen substantially at the angle (α) of the fluid leaving the at least one blast pipe (18).

9. A mobile device (16) for a flushing installation according to any one of Claims 7 and 8, **characterized in that** it comprises :
- a mobile structure able to move along a horizontal axis above the plane of grilles (12) of gulleys (1),
- at least one blast pipe (18) attached to this structure, suitable for spraying a fluid at an angle α not 90° defined in relation to the plane of the grilles (12),
- a connection (20) to a supply of fluid under pressure,
- second guidance means (22) carried by the mobile device (16), the said second guidance means being suitable for cooperating with first guidance means placed along a gulley so as to guide and align the mobile device in relation to the axis of the gulley (1).

10. A mobile flushing device (16) according to Claim 9, **characterized in that** it comprises a skirt (30) one of the dimensions of which corresponds to the width of the gulleys (1).

11. A mobile flushing device (16) according to either one of Claims 9 and 10, **characterized in that** it comprises at least one deflector (26) associated with the blast pipes (18), returning the splashes of fluid through the grille (12), substantially at the same defined angle (α).

12. A mobile flushing device (16) according to any one of Claims 9 to 11, **characterized in that** it comprises an end piece by which it can be attached to the mouthpiece of a high pressure cleaning apparatus.

13. A mobile flushing device (16) according to any one of Claims 9 to 12, **characterized in that** it comprises an on-board supply of fluid under pressure.

14. A mobile flushing device (16) according to Claim 13, **characterized in that** it comprises a reservoir for the supply of fluid under pressure.

15. A grille (12) for covering gulleys (1) for an installation for cleaning out gulleys (1) according to any one of Claims 7 and 8, **characterized in that** it is formed of elements of mesh (14) disposed transversely in relation to the axis of the gulley and the apparent surface area of which is at a minimum when the said elements (14) are seen from an angle (α) not 90° defined in relation to its upper plane, the said grille comprising lateral ribs or slots disposed parallel to the longitudinal axis of the grille and constituting guidance and alignment means (24, 34) suitable for cooperating with complementary guidance means (22) disposed on a mobile flushing device (16) so as to guide and align the said device in relation to the axis of the gulley (1).

16. A grille (12) for covering gulleys (1) according to Claim 15, **characterized in that** the upper face (32) of the elements of mesh (14) is inclined so as to cooperate with at least one deflector (26) of the mobile device (16) to return the fraction of the fluid under pressure striking these elements (14) towards the grille (14) at the same defined angle (α).
